# EUROPEAN PATENT APPLICATION

(11) **EP 4 550 561 A1**
(43) Date of publication of application: **07.05.2025**
(21) Application number: 23830954.6
(22) Date of filing: 01.06.2023
(51) Int. Cl.: H01M 50/503, H01M 50/213, H01M 50/289, H01M 50/291, H01M 50/342, H01M 50/505, H01M 50/509, H01M 50/526, H01M 50/548

(54) **BATTERY PACK**

(30) Priority: 30.06.2022 JP 2022105925
(71) Applicant: Panasonic Energy Co., Ltd., Osaka 570-8511 (JP)
(72) Inventor: NAMURA, Takashi, Kadoma-shi, Osaka 571-0057 (JP); SUZUKI, Shinji, Kadoma-shi, Osaka 571-0057 (JP); YAMAGAMI, Yasuhiro, Kadoma-shi, Osaka 571-0057 (JP)
(74) Representative: Novagraaf International SA
(86) International application number: PCT/JP2023/020415
(87) International publication number: WO 2024/004504

(57) **Abstract**

A battery pack includes a plurality of secondary battery cells arranged in parallel to each other in a longitudinal direction, each of the plurality of secondary battery cells including end surface electrodes each on both ends, at least one of the end surface electrodes being a first electrode provided with a safety valve, a battery holder for holding the plurality of secondary battery cells; and a lead plate with conductivity for connecting the end surface electrodes of the secondary battery cells adjacent to each other. The lead plate forms an open space between the first electrodes in the secondary battery cells adjacent to each other.

## Description

### Technical Field

The present disclosure relates to a battery pack.

### Background Art

A battery pack including a large number of secondary battery cells connected in series or parallel is used as a power source for portable electric devices such as portable speakers, electric cleaners, and power tools, or as a backup power source for servers used for stationary power storage, as power source for homes, businesses, and factories, and further as power sources for driving assist bicycles, driving power sources for electric carts, electric scooters, and vehicles such as hybrid cars and electric cars, and the like. In most of these battery packs, a large number of secondary battery cells are held in a state in which secondary battery cells are adjacent to each other by a battery holder, and adjacent secondary battery cells are connected to each other by welding with a plate-shaped lead plate (see, for example, Patent Document 1).

Lithium ion secondary batteries are generally used as the secondary battery cells used in such battery packs, but lithium ion secondary battery cells may cause unsafe events such as smoking and ignition due to some abnormalities. For this reason, a safety valve is provided on an end surface where the electrode of a lithium ion secondary battery cell is formed (for example, a positive electrode side end surface). The safety valve is configured to be opened to release a high-pressure gas inside to the outside when the internal pressure of an outer covering can of the secondary battery cell becomes high. However, if an unsafe event occurs in one of the secondary battery cells, emissions such as high temperature gas, flame, and electrolyte, released from the safety valve of the secondary battery cell could be transferred through the lead plate to other adjacent secondary battery cells, and the other secondary battery cells could be damaged and catch fire.

### Citation List

### Patent Literature

[PTL 1] Japanese Unexamined Patent Application, Publication No. 2012-033464

### SUMMARY OF THE INVENTION

One aspect of the present disclosure is to provide a battery pack in which adjacent secondary battery cells are connected to each other by a lead plate, wherein when an abnormality occurs in one of the battery cells, a damage to other adjacent secondary battery cells is suppressed.

A battery pack according to one embodiment of the present invention includes a plurality of secondary battery cells arranged in parallel to each other in a longitudinal direction, each of the plurality of secondary battery cells including end surface electrodes each on both ends, at least one of the end surface electrodes being a first electrode including a safety valve; a battery holder for holding the plurality of secondary battery cells; and a lead plate with conductivity for connecting the end surface electrodes of the secondary battery cells adjacent to each other, and the lead plate forms an open space between the first electrodes in the secondary battery cells adjacent to each other.

With a battery pack according to one embodiment of the present invention, an open space is provided between the first electrodes in the adjacent secondary battery cells instead of completely closing by the lead plate. Thus, even if any one of the secondary battery cells releases emissions such as high-temperature gas due to abnormality, by releasing these emissions to the outside from the open space, it is possible to reduce a situation where other adjacent secondary battery cells are adversely affected.

### BRIEF DESCRIPTION OF THE DRAWINGS

FIG. 1 is an external perspective view showing a battery pack according to one exemplary embodiment of the present invention.
FIG. 2 is a vertical sectional view of the battery pack of FIG. 1 taken along line II-II.
FIG. 3 is a perspective view showing a manufacturing step of the battery pack of FIG. 1.
FIG. 4 is an exploded perspective view of a battery assembly of the battery pack of FIG. 3.
FIG. 5 is an exploded perspective view of the battery assembly of FIG. 4 in which lead plates are removed.
FIG. 6 is an exploded rear perspective view of the battery assembly of FIG. 4 in which lead plates are removed.
FIG. 7 is an exploded perspective view of the battery assembly FIG. 5 in which a battery holder is disassembled.
FIG. 8 is a front view of a battery assembly shown in FIG. 4.
FIG. 9 is a rear view of a battery assembly shown in FIG. 4.
FIG. 10 is an enlarged sectional view of a principal part of the battery pack of FIG. 2.
FIG. 11 is a schematic sectional view showing a state in which an emission is exhausted from a secondary battery cell of a conventional battery pack.
FIG. 12 is a schematic sectional view showing a state in which an emission is exhausted from a secondary battery cell of the present invention.

### DESCRIPTION OF EMBODIMENT

Embodiments of the present invention may be specified by the following configurations and features.

In the battery pack according to another embodiment of the present invention, in the above embodiment, a lead plate may include a plurality of crossing pieces each connected to the first electrode of each of the secondary battery cells, and extending in a second direction intersecting a first line linking the centers of the first electrodes of the secondary battery cells adjacent to each other at a shortest distance, and a connection part extending from an edge of each crossing piece connected to the secondary battery cells adjacent to each other in parallel to the first line, and connecting the crossing pieces to each other, the crossing piece and the connection part may form the open space. With the above configuration, by detouring the lead plate so as not to overlap the first line linking the first electrodes of secondary battery cells adjacent to each other at the shortest distance, while the opening space is formed between the first electrodes of the secondary battery cells adjacent to each other, electrical connection can be maintained.

In the battery pack according to still another embodiment of the present invention, in the above embodiment, the open space may be formed of the crossing pieces adjacent to each other and the connection part of the lead plate in a U-shape in plan view.

In the battery pack according to yet another embodiment of the present invention, in the above embodiment, the crossing piece may be disposed between the first electrodes of the secondary battery cells adjacent to each other, and the lead plate may further include a welding piece extending from each crossing piece to the first electrode of the corresponding secondary battery cell along the first line. With the above configuration, the lead plate can be welded to the first electrode of the secondary battery cell with the welding piece.

In the battery pack according to a further embodiment of the present invention, in the above embodiment, the open space may be formed around the first electrode of each of the secondary battery cells, and the crossing piece connected to one of the first electrode and the open space formed around the other of the first electrodes may be disposed on the first line in the first electrodes adjacent to each other. With the above configuration, an emission exhausted from the safety valve of the first electrode of the secondary battery cell is released from the open space formed around the first electrode, but even if a part of the emission passes between the crossing piece connected to the first electrode and the battery holder along the first line, the emission is exhausted to the outside from the open space formed around an adjacent first electrode. Therefore, an emission exhausted from the first electrode can be allowed to pass through the open space, and frame effects on an adjacent secondary battery cell can be ideally suppressed.

In the battery pack according to a further embodiment of the present invention, in the above embodiment, the battery holder may be formed in a box shape in an outer shape, and the battery holder may include a plurality of secondary battery cells with the first electrodes disposed along a first side of a first surface forming the box shape, and the lead plate further may include a folded piece folded on a second surface intersecting the first side of the first surface from the connection part positioned on the first surface. With the above configuration, the area of a conductive path can be obtained by adding the folded piece separately from the connection part. In particular, since an open space is formed on the first line linking the first electrodes of adjacent secondary battery cells at the shortest distance, the loss of the area of a part of the conductive path can be compensated by adding a folded piece.

In the battery pack according to a further embodiment of the present invention, in the above embodiment, in a connection site at which the connection part and the folded piece may be connected to each other on the first side, in a region in which the first electrodes of the plurality of secondary battery cells are positioned on the first surface, the connection site may be provided with an opening part. With the above configuration, even if the safety valve is opened in a first electrode of one of the secondary battery cells and an emission such as high temperature gas is ejected, the emission is released through the opening also in the lateral direction where the secondary battery cell does not exist, thereby avoiding or suppressing damage to other secondary battery cells.

In the battery pack according to a further embodiment of the present invention, in the above embodiment, the lead plate may further include a linking part for connecting the connection part and the folded piece to each other, wherein the linking part is provided to face a region between the first electrodes of the secondary battery cells adjacent to each other in the first surface.

In the battery pack according to a further embodiment of the present invention, in the above embodiment, the battery pack may include a plurality of parallel units connected in parallel, each of the plurality of parallel units including the secondary battery cells arranged in parallel, wherein the plurality of parallel units is connected in series to each other to form a battery block including the plurality of secondary battery cells connected in series and parallel, and the lead plate may be an output lead plate connected at an output of the battery block.

In the battery pack according to a further embodiment of the present invention, in the above embodiment, the battery pack may include a plurality of parallel units connected in parallel, each of the plurality of parallel units including the secondary battery cells arranged in parallel, wherein the plurality of parallel units is connected in series to form a battery block including the plurality of secondary battery cells connected in series and parallel, and the lead plate may be an output lead plate connected at an output side of the battery block, the lead plate may be an intermediate lead plate connecting the parallel units in series, and the intermediate lead plate includes a plate-like laminated part connecting the first electrodes of the secondary battery cells adjacent to each other and second electrodes as the end surface electrodes opposite side, in a direction parallel to the first line, and the plate-like laminated part is used also as the connection part, and includes a plurality of the crossing pieces extending from the plate-like laminated part in the second direction, and connecting the crossing piece to the first electrode of the corresponding the secondary battery cell.

In the battery pack according to a further embodiment of the present invention, in the above embodiment, the battery pack may include an insulating plate covering a surface of the lead plate and insulating the lead plate. The insulating plate may include an exhaust hole in a position facing the open space, for allowing an emission ejected from the secondary battery cell to pass.

In the battery pack according to a further embodiment of the present invention, in the above embodiment, an exhaust hole may be slit-shaped.

Hereinafter, exemplary embodiments of the present invention are described with reference to the drawings. However, the exemplary embodiments described below are merely examples for giving a concrete form to the technical idea of the present invention, and therefore, the present invention is not limited to the following. Furthermore, members set forth in claims are never limited to members in the exemplary embodiments. In particular, a size, a material, a shape, relative positioning, or the like, of the component members described in the exemplary embodiments is not aimed at limiting the scope of the present invention only thereto unless otherwise described but merely illustrative. Note here that a size, a positional relationship, or the like, of the members in the respective drawings may be exaggerated for clarifying the description. Furthermore, in the following description, the same or similar members are represented by the same names and reference symbols, and the detailed description thereof is appropriately omitted. Furthermore, as for each component of the present invention, one member may serve as a plurality of components by forming the plurality of components with the same member. On the contrary, a function of one member may be shared by the plurality of members.

A battery pack of the present invention can be sued as a power source for electric devices such as speakers, electric cleaners, and power tools, as a backup power source for servers used for stationary power storage, as power source devices for homes, businesses, and factories, and further as power sources for driving assist bicycles, electric carts, electric scooters, and vehicles such as hybrid cars and electric cars. Hereinafter, as one exemplary embodiment of the present invention, a battery pack used for a power source for a wireless speaker is described.

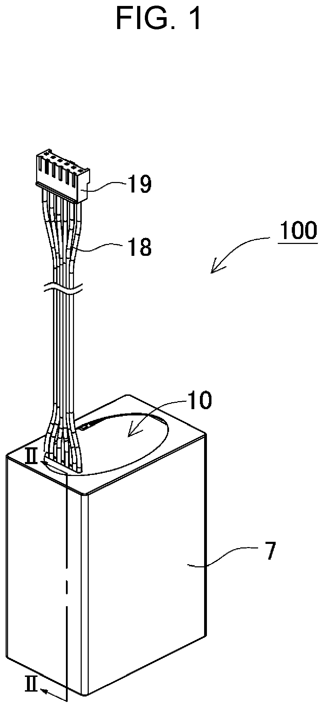

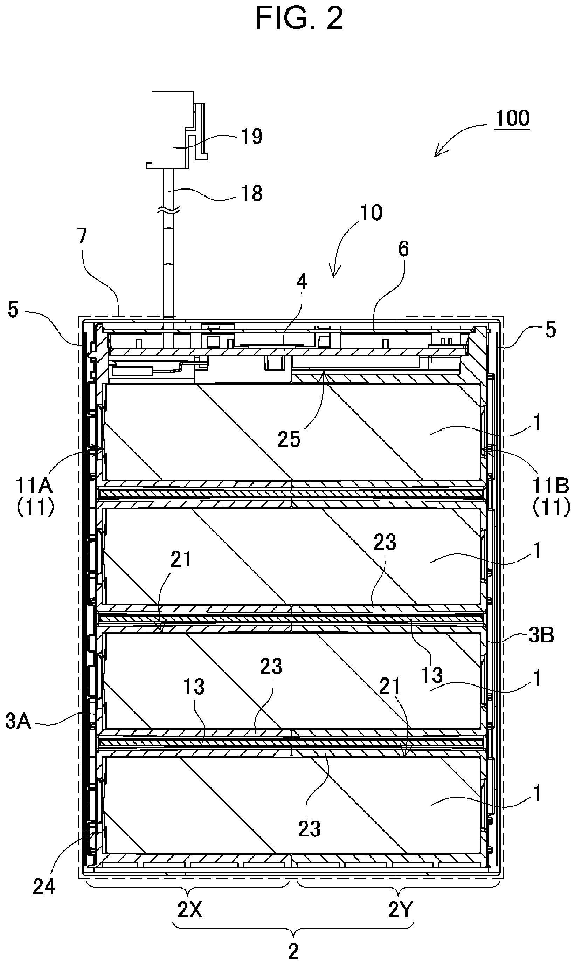

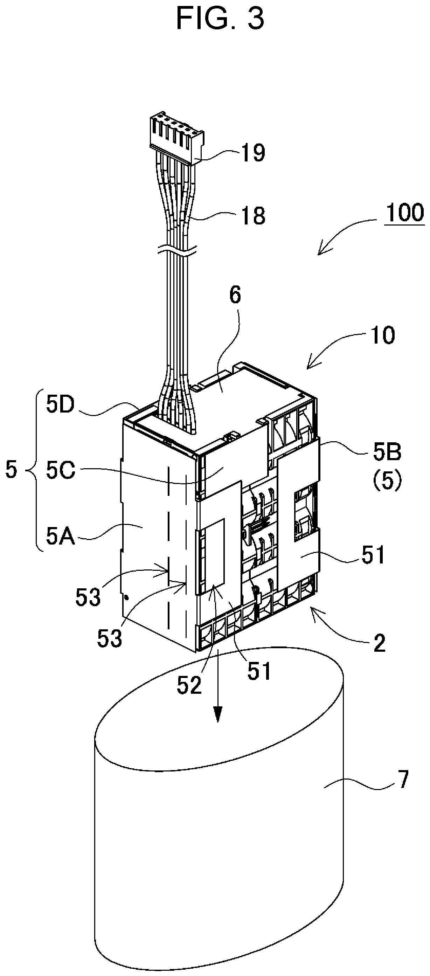

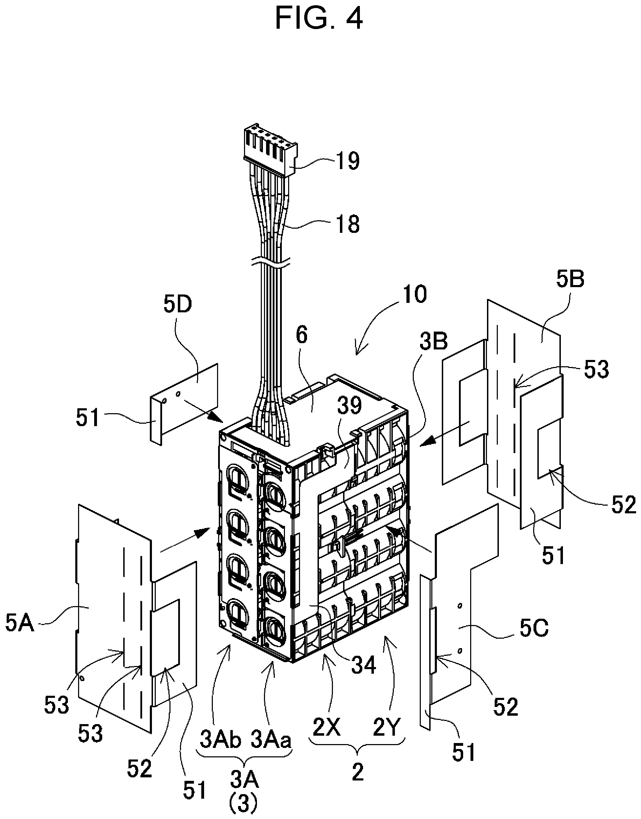

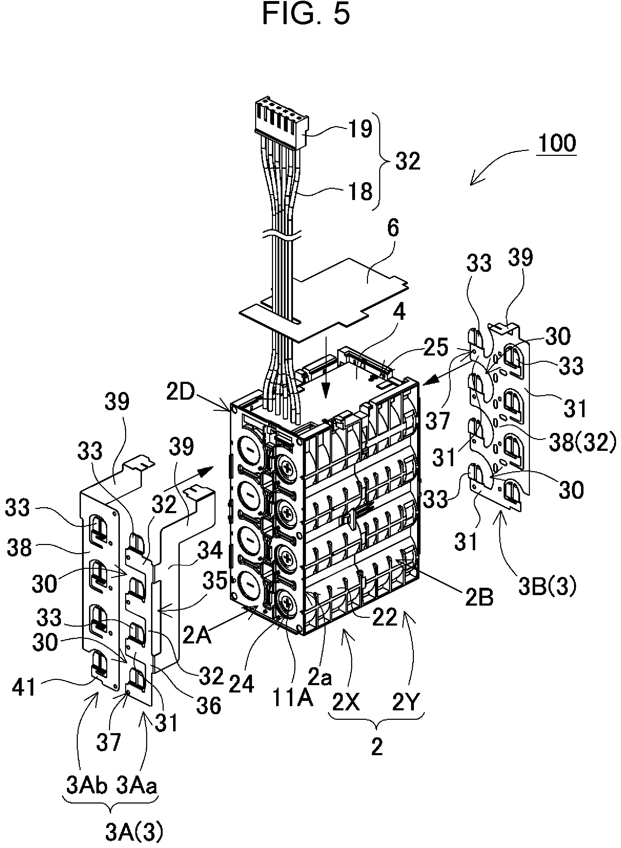

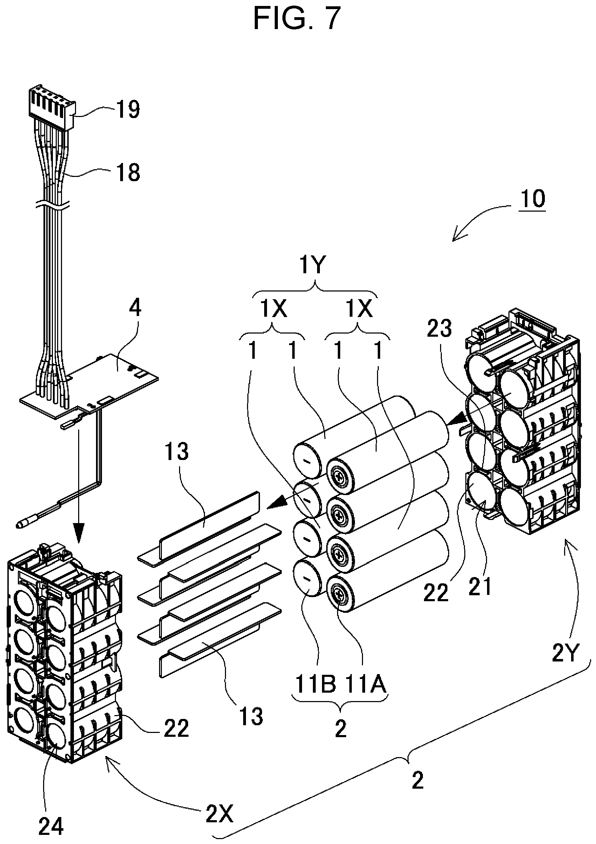

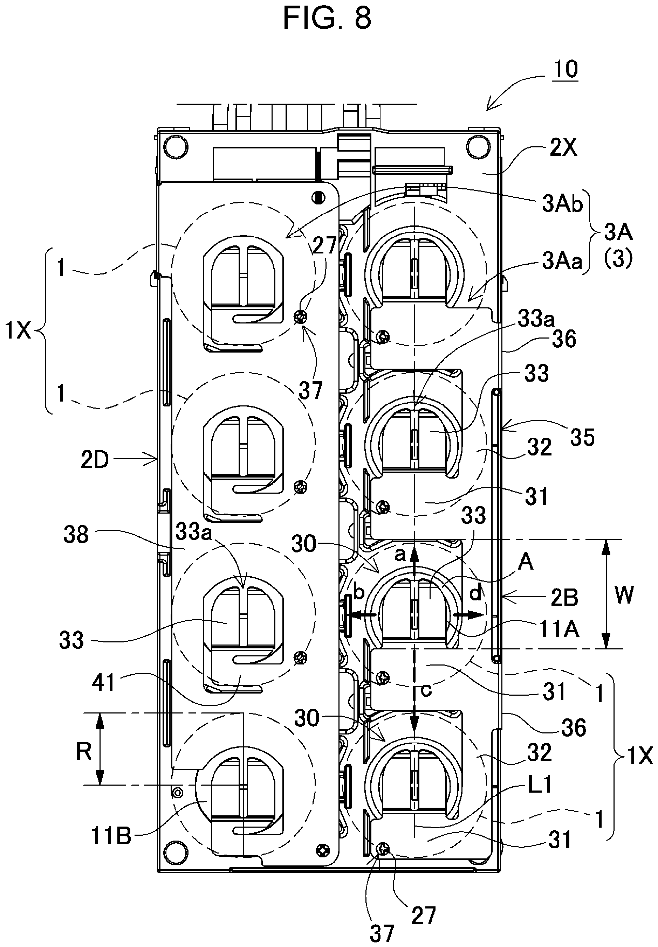

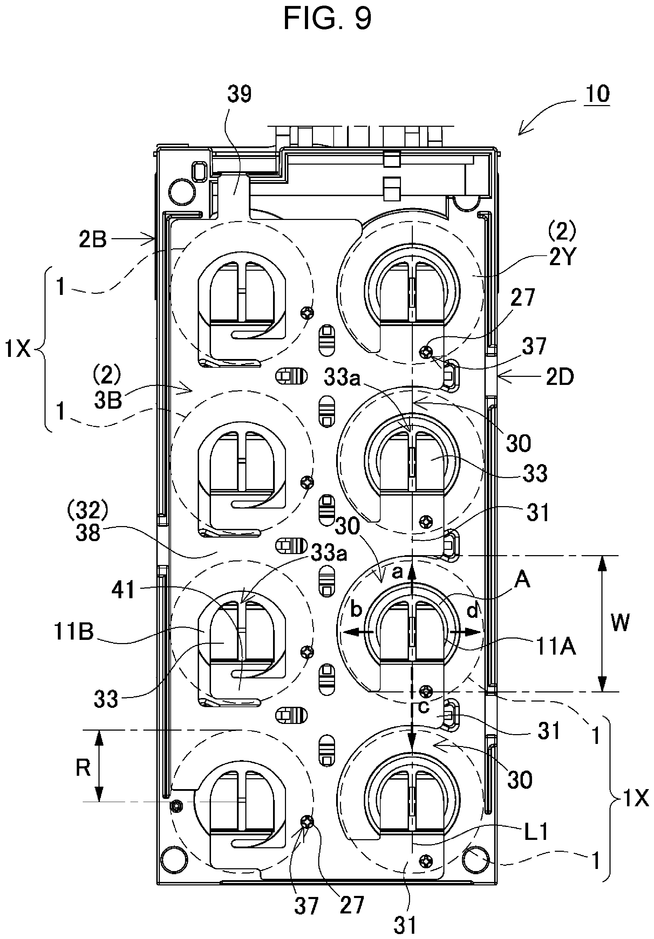

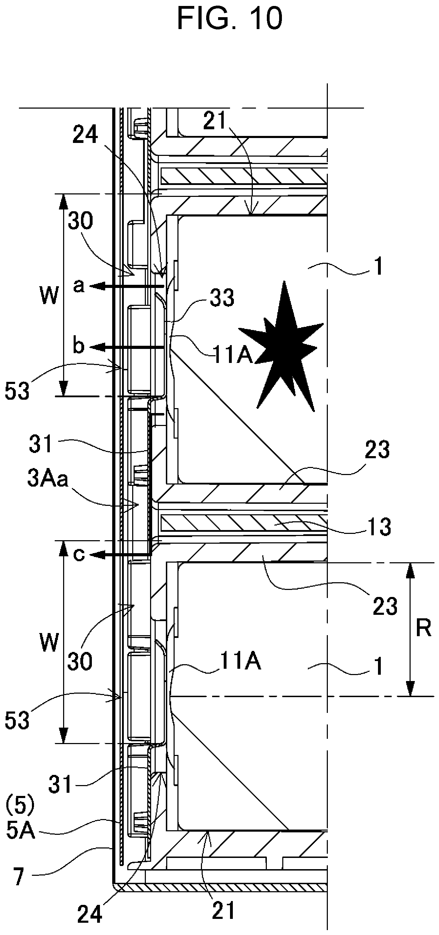

[First exemplary embodiment] Battery pack 100 according to the first exemplary embodiment of the present invention is shown in FIG. 1 to FIG. 10. FIG. 1 is an external perspective view of a battery pack; FIG. 2 is a vertical sectional view of the battery pack shown in FIG. 1 taken along line II-II; FIG. 3 is a perspective view showing a manufacturing step of the battery pack of FIG. 1; FIG. 4 is an exploded perspective view showing a battery assembly of the battery pack of FIG. 3; Figs 5 and 6 are respectively an exploded perspective view and an exploded perspective rear view of the battery assembly of FIG. 4 in which lead plates are removed; FIG. 7 is an exploded perspective view in which a battery holder of the battery assembly of FIG. 5 is disassembled; Figs 8 and 9 are respectively a front view and a rear view of the battery assembly shown in FIG. 4; FIG. 10 is an enlarged sectional view of a principal part of the battery pack of FIG. 2. Battery pack 100 shown in these drawings includes a plurality of secondary battery cells 1 arranged in parallel to each other in the longitudinal direction in which at least one of end surface electrodes 11 is first electrode 11A provided with a safety valve, battery holder 2 for holding plurality of secondary battery cells 1, and conductive lead plate 3 for connecting end surface electrodes 11 of the adjacent secondary battery cells 1.

### (Battery assembly 10)

In battery pack 100 shown in Figs 1 to 10, lead plate 3 is fixed to both end surfaces of battery holder 2 housing a plurality of secondary battery cells 1, and circuit board 4 is disposed on the top of battery holder 2 to form battery assembly 10. On the outer peripheral surface of battery assembly 10, a surface of lead plate 3 is covered with insulating plate 5, the upper surface of battery assembly 10 is covered with insulating member 6, and battery assembly 10 whose surface is insulated is covered with outer covering sheet 7.

### (Secondary battery cell 1)

Each secondary battery cell 1 is a cylindrical secondary battery cell whose outer covering can is cylindrical-shaped. An example of secondary battery cell 1 that can be used includes secondary battery cell 1 in which an electrode body is housed in a metal outer covering can, and an electrolyte is filled, and an opening part of the outer covering can is hermetically closed with a sealing plate. The cylindrical secondary battery cell includes end surface electrodes 11 at both ends in the longitudinal direction. Secondary battery cells 1 include electrodes provided in respective central parts of bottom surface of the outer covering can and the sealing plate that are both end surfaces, serving as a positive electrode and a negative electrode. Furthermore, in secondary battery cell 1, at least one of end surface electrodes 11 at both ends is first electrode 11A provided with a safety valve (not shown). Secondary battery cell 1 in the drawing is configured by a protruded electrode in which first electrode 11A provided with a safety valve is disposed in the center part of the sealing plate. The other end surface electrode 11 as second electrode 11B is configured by a bottom surface electrode of the outer covering can. The safety valve is a member that opens when an internal pressure of the outer covering can is increased, and releases inside gas. Therefore, secondary battery cell 1 can use all types of secondary batteries which can exhaust emissions of a gas lamp when an internal pressure is increased and a safety valve is opened. Note here that the safety valve is generally provided at a positive electrode side, but in the present invention, a position at which a safety valve is provided is not limited to the positive electrode side, and may be at other positions, for example, a negative electrode side.

For such a secondary battery cell 1, a non-aqueous electrolyte secondary battery with high energy efficiency, such as a lithium ion secondary battery, can be suitably used. However, in the battery pack of the present invention, the secondary battery cell is not necessarily specified to a lithium ion secondary battery. Also, the secondary battery cell is not necessarily specified to a cylindrical battery. For the secondary battery cells, all rechargeable batteries, such as nickel hydrogen battery and nickel-cadmium battery, can be used.

### (Battery holder 2)

Battery holder 2 holds a plurality of secondary battery cells 1. Battery holder 2 of FIG. 2 holds a plurality of secondary battery cells 1 in parallel to each other in the longitudinal direction with end surface electrodes 11 disposed on both ends in the same plane. An outer shape of battery holder 2 is box shape in which a plurality of secondary battery cells 1 is arranged in multiple stages and rows. Battery holder 2 of FIG. 7 is made of plastic molded into a shape with holding cylinders 22 in which each of the plurality of secondary battery cells 1 is disposed in a predetermined position. In battery holder 2, eight holding cylinders 22 are linked in parallel in four stages and two rows, and the inside of holding cylinders 22 is made to be approximately equal to the outer shape of secondary battery cell 1 to make storage space 21. Battery holder 2 of the drawings includes eight secondary battery cells 1 arranged in four stages and two rows, and are arranged vertically and horizontally. Battery holder 2 of the drawings includes eight secondary battery cells 1 arranged in a matrix so as to have a left-right a symmetrical position in front view. This structure is advantageous that battery holder 2 in which secondary battery cells 1 are arranged in multiple stages can be held in a stable standing position. The number and arrangement of secondary battery cells 1 are not limited to this configuration, and a structure may include seven or less or nine or more secondary battery cells 1. Furthermore, the number of stages and rows is not limited to four stages and two rows, and the number of stages and rows can be changed variously. In addition to matrix arrangement, secondary battery cells 6 may also be arranged in a staggered manner, alternating in each row. Battery holder 2 is made of a material with excellent insulation and heat resistance, and is made of resin such as polycarbonate or ABS.

Battery holder 2 in FIG. 7 is divided into first holder 2X and second holder 2Y in the longitudinal direction of secondary battery cell 1. Battery holder 2 allows elongated secondary battery cell 1 to be inserted smoothly. First holder 2X and second holder 2Y are manufactured separately by molding plastic, and secondary battery cell 1 inserted therein, and are linked to each other. First holder 2X and second holder 2Y are provided with cylindrical storage space 21 for inserting and arranging cylindrical secondary battery cell 1 in a predetermined position. The internal shape of storage space 21 is approximately equal to the external shape of secondary battery cell 1, and precisely, the internal shape of storage space 21 is made to be slightly larger so that the secondary battery cell 1 can be smoothly inserted and placed in a predetermined position. First holder 2X and second holder 2Y with this structure are linked to each other in a predetermined position via secondary battery cell 1, with both ends of cylindrical secondary battery cell 1 inserted therein. First holder 2X and second holder 2Y can be linked more accurately by making their facing surfaces to be a fitting structure, and are also linked in a predetermined position via non-melting plate 13, which will be described later.

Battery assembly 10 shown in Figs 2 and 7 includes non-melting plate 13 such as a mica plate inside partition wall 23 arranged between adjacent secondary battery cells 1. In battery holder 2 shown in the drawing, since secondary battery cells 1 are arranged in four stages and two rows, cross-shaped partition walls 23 are placed vertically in eight secondary battery cells 1 arranged vertically and horizontally. Partition wall 23 includes an insertion gap into which non-melting plate 13 inside is inserted. In partition wall 23, non-melting plate 13 such as a mica plate is inserted into this insertion gap. Battery assembly 10 can prevent thermal runaway from being induced in adjacent secondary battery cell 1 when any one of the secondary battery cells 1 undergo thermal runaway and abnormal heat.

Furthermore, battery holder 2 is provided with connecting windows 24 opening at positions facing end surface electrodes 11 of secondary battery cells 1 to expose end surface electrodes 11 and connect lead plate 3. Connection window 24 that guides first electrode 11A, which is a protruded electrode, is larger than the outer shape of the protruded electrode, and has a size that allows the protruded electrode to be inserted inside. This connection window 24 can be welded to lead plate 3 by arranging the protruded electrode inside, so that the height difference of first electrode 11A exposed from connection window 24 is lowered, and lead plate 3 can be welded to first electrode 11A. Connection windows 24 disposed at positions facing the second electrodes 11B disposed at facing positions as the bottom surface of the outer covering can, are opened in a size that allows welding piece 33 of lead plate 3 to be guided to second electrode 11B.

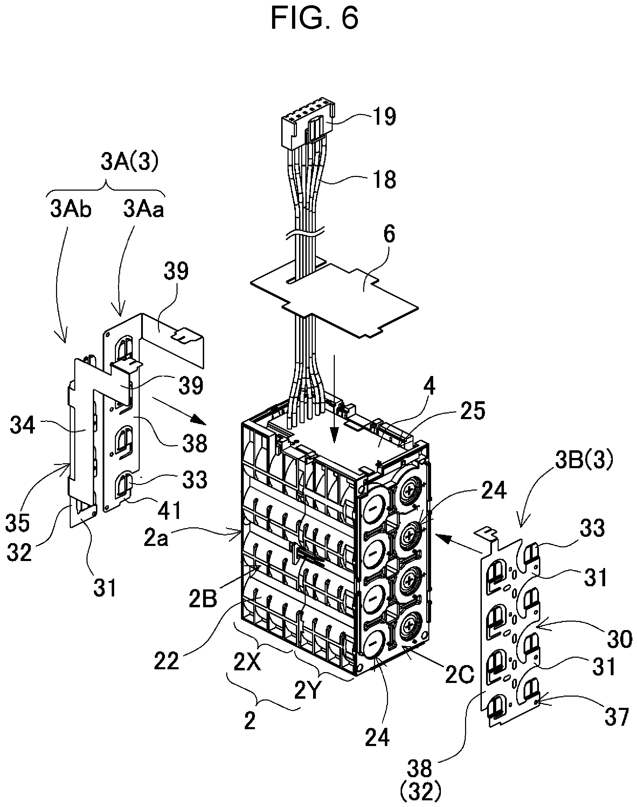

Furthermore, battery holder 2 is provided on the top with storage region 25 for storing circuit board 4. Battery holder 2 shown in FIG. 6 has front, rear, left and right peripheral walls protruding from the top surface, and forms a recess inside the peripheral walls on four sides to form storage region 25 of circuit board 4. Battery holder 2 of FIG. 2 includes a gap with respect to the bottom surface of storage region 25, and circuit board 4 is disposed therein. Circuit board 4 shown in FIG. 6 is arranged in a predetermined position so that the outer periphery thereof fits into the inner periphery of storage region 25. Note that the battery holder may be directly fixed in the installation region of the circuit board by screwing or the like, or a board holder for holding the circuit board may be provided separately.

### (Lead plate 3)

Lead plate 3 electrically connects secondary battery cells 1 held by battery holder 2. Lead plate 3 is manufactured by press-molding a metal plate with excellent conductivity, and is fixed by welding to end surface electrodes 11 provided on the end surface of secondary battery cells 1 of battery holder 2. Battery assembly 10 shown in the drawing includes eight secondary battery cells 1 connected in series and in parallel via lead plates 3. In battery assembly 10 of FIG. 7, four secondary battery cells 1 disposed in two right and left rows and arranged in four stages vertically are connected in parallel to each other to form parallel unit 1X, and the right and left parallel units 1X are connected in series to each other to connect eight secondary battery cells 1 in four parallel and two series to form battery block 1Y. As shown in FIGS. 6 and 9, battery assembly 10 includes two sets of parallel units 1X connected in series via an intermediate lead plate 3B on third surface 2C of box-shaped battery holder 2. As shown in Figs 5 and 8, the output side of the parallel units 1X connected in series is connected to output lead plate 3A on first surface 2A of battery holder 2.

Output lead plate 3A includes first output lead plate 3Aa connecting first electrodes 11A of a plurality of secondary battery cells 1 constituting parallel unit 1X at the output side of battery block 1Y, and second output lead plate 3Ab connecting second electrodes 11B. Furthermore, as shown in FIG. 9, intermediate lead plate 3B connects second electrodes 11B adjacent to each other of one parallel units 1X among parallel units 1X connected in series at the left side, and first electrodes 11A adjacent to each other of another parallel unit 1X among parallel units 1X connected in series at the right side. As shown in these drawings, first output lead plate 3Aa and intermediate lead plate 3B connecting the adjacent first electrodes 11A form open space 30 for releasing emissions such as gas exhausted from the safety valve of first electrode 11A, between first electrode 11A of secondary battery cell 1.

As shown in Figs 8 and 9, first output lead plate 3Aa and intermediate lead plate 3B include a plurality of crossing pieces 31 connected to first electrode 11A of corresponding secondary battery cell 1, and connection parts 32 for connecting crossing pieces 31 connected to corresponding secondary battery cell 1. A plurality of crossing pieces 31 each extends in a second direction intersecting first line L1 linking the centers of first electrodes 11A of adjacent secondary battery cells 1 at the shortest distance. Connection part 32 extends from the edge of each crossing piece 31 connected to the adjacent secondary battery cells 1 in parallel to first line L1, and connects each crossing piece 31. This first output lead plate 3Aa forms open space 30 around first electrode 11A with crossing piece 31 and connection part 32.

Furthermore, first output lead plate 3Aa and intermediate lead plate 3B each includes welding piece 33 extending along the first line L1 from each crossing piece 31 toward first electrode 11A of corresponding secondary battery cell 1. Each of crossing pieces 31 shown in the drawing extends in a direction parallel to first line L1 in plan view, but crossing pieces 31 can also be slightly inclined with respect to the first line L1. As shown in FIG. 5, these welding pieces 33 extend from crossing piece 31 with step difference provided. Thus, even if there is a height difference between the height of the surface on which lead plate 3 fixed on battery holder 2 is disposed and the height of the surface on which first electrode 11A is disposed, the height difference is absorbed by the step difference of welding piece 33, and welding piece 33 is brought into surface contact with the surface of first electrode 11A to improve welding reliability. Furthermore, each welding piece 33 includes slit 33a, and by pressing the welding tool across slit 33a, the reliability of welding is improved. In welding piece 33 shown in the drawing, by dividing the welding part into a pair of pieces and slit 33a is provided between them, but the welding piece can be made into a slit by opening an elongated hole.

First output lead plate 3Aa shown in Figs. 5 and 8 connects first electrodes 11A of a plurality of secondary battery cells 1 disposed along one first side 2a of first surface 2A of battery holder 2 formed in a box shape. First output lead plate 3Aa includes belt-like connection part 32, in parallel to the first line L1, extending along first side 2a as the boundary edge with second surface 2B at the side edge of the first surface 2A of battery holder 2. In addition, crossing piece 31 extending from belt-like connection part 32 toward the second direction (substantially vertical direction in the drawing) is provided to form open space 30 that is in U-shaped in plan view by adjacent crossing piece 31 and connection part 32. In FIG. 8, crossing piece 31 connected to first electrode 11A of secondary battery cell 1 excluding secondary battery cell 1 positioned in the lower most position is disposed between first electrodes 11A of adjacent secondary battery cells 1, and crossing piece 31 connected to first electrode 11A of secondary battery cell that is positioned in the lowermost position is disposed between first electrode 11A and the lower edge of battery holder 2.

Furthermore, first output lead plate 3Aa shown in FIG. 5 includes folded piece 34 that is folded from connection part 32 positioned on first surface 2A toward second surface 2B that intersects first side 2a of first surface 2A. In this first output lead plate 3Aa, when folded piece 34 is provided in addition to connection part 32, it is possible to increase an area of a conduction path lost by providing open space 30 on first line L1. Furthermore, first output lead plate 3Aa shown in FIG. 5 includes opening 35 in a connection site in a region where first electrodes 11A of the plurality of secondary battery cells 1 is positioned on first surface 2A in a connection site that connects connection part 32 and folded piece 34 on first side 2a. Thus, even if emissions such as gas exhausted from the safety valve of first electrode 11A enter and move between connection part 32 and battery holder 2, since the emissions can be allowed to pass through opening 35 provided along first side 2a and exhausted to the outside, movement of the emissions exhausted from the safety valve along connection part 32 and folded piece 34 can be suppressed and adverse effects of the emission can be reduced. Furthermore, first output lead plate 3Aa includes linking part 36 that connects connection part 32 and folded piece 34, and this linking part 36 is provided to face a region between adjacent first electrodes 11A on first surface 2A. This first output lead plate 3Aa links connection part 32 to folded piece 34 by linking parts 36 in two points between first electrodes 11A, and forms opening part 35 between these linking parts 36. In this structure, linking part 36 that links connection part 32 to folded piece 34 prevents side edge parts facing first electrode 11A from being closed, so that emission exhausted from the safety valve can be exhausted efficiently.

Furthermore, intermediate lead plate 3B shown in FIG. 9 includes plate-like laminated part 38 connected to second electrode 11B of the vertically adjacent secondary battery cells 1 on the left side of third surface 2C of battery holder 2. This plate-like laminated part 38 is also used as connection part 32 extending in parallel to the first line L1, and crossing piece 31 is provided extending from connection part 32 in the second direction (approximately perpendicular direction in the drawing). This intermediate lead plate 3B connects each crossing piece 31 to first electrode 11A of the vertically adjacent secondary battery cells 1 on the right side of third surface 2C of battery holder 2, and while the vertically adjacent secondary battery cells 1 are connected in parallel via the plate-like laminated part 38 as connection part 32, horizontally adjacent secondary battery cells 1 are connected in series. In intermediate lead plate 3B shown in the drawing, the boundary between crossing piece 31 and connection part 32 is curved in an arc shape, and the adjacent crossing piece 31 and connection part 32 form open space 30 that is approximately circular in plan view.

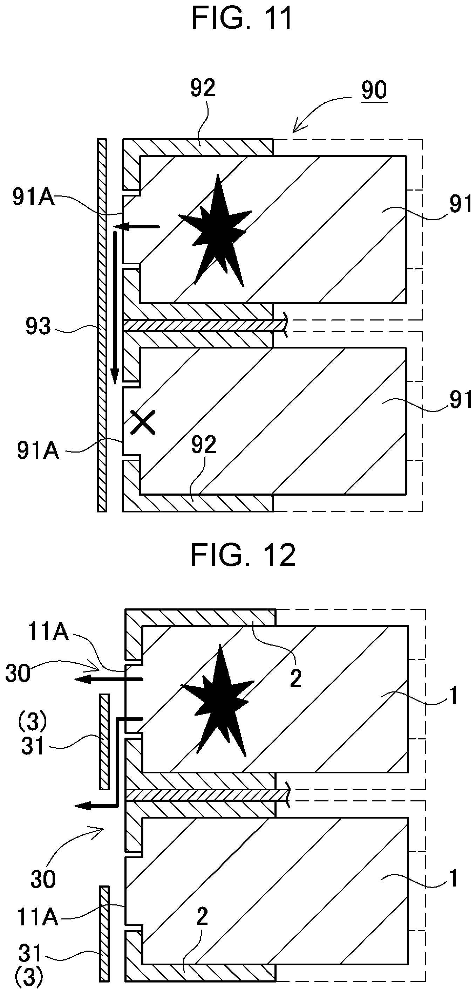

Herein, one focus point of the present invention is described. In lead plate 3 that connects first electrodes 11A adjacent to each other, it is required to suppress moving of emissions such as gas exhausted from the safety valve of one of the secondary battery cells 1 to first electrode 11A of the other secondary battery cell 1 through lead plate 3 and causing adverse effects. As shown in the schematic sectional view of FIG. 11, in a conventional battery pack 90 in which a large number of secondary battery cells 91 are held by battery holder 92 made of resin, battery holder 92 is divided into two parts, secondary battery cell 91 is inserted into the cylindrical body formed in each divided holder, and secondary battery cell 91 is held from the left and right sides. In such a battery pack 90, if an unsafe event occurs in any one of secondary battery cells 91 (the upper secondary battery cell in FIG. 11), as shown by the arrow in FIG. 11, it was considered that an emission such as high-temperature gas, flame, and electrolyte, exhausted from the safety valve provided on first electrode 91A of cell 91 travels through lead plate 93 to other adjacent secondary battery cells 91, causing damage and causing fire.

On the other hand, in battery pack 100 according to this exemplary embodiment, as shown in FIG. 12, as described above, by providing open space 30 between adjacent first electrodes 11A, at least in lead plate 3 facing first electrode 11A provided with the safety valve, an emission exhausted from the safety valve can be allowed to flow shown by an arrow of FIG. 12, and damage to the other secondary battery cell 1 can be minimized.

Open space 30 is a region around first electrode 11A, and is formed over a region facing 2/3 or more of the entire periphery of first electrode 11A. As shown in Figs 8 to 10, open space 30, which is U-shaped or circular in plan view, has a distance W between adjacent crossing pieces 31 wider than a radius R of secondary battery cell 1, for example, 1.2 to 1.5 times the radius R. In this way, by widening open space 30 by setting the distance W between adjacent crossing pieces 31 to be wider than the radius R of secondary battery cell 1, for example, 1.5 times the radius R, emissions such as gas exhausted from the safety valve can be prevented from moving through lead plate 3 to first electrode 11A of the adjacent secondary battery, so that the emissions can be efficiently exhausted to the outside.

Lead plate 3 shown in Figs 8 and 9 incudes open space 30 formed around each first electrode 11A in a region facing about 3/4 of the entire periphery of first electrode 11A, and a linking part between welding piece 33 and crossing piece 31 in the remaining region. In this way, a structure in which open space 30 is provided over a wide region of the outer periphery of first electrode 11A suppresses moving of emission in the direction shown by an arrow c when emission is exhausted from first electrode 11A of secondary battery cell 1 in Figs 8 and 9. This is because when welding piece 33 is welded to first electrode 11A, crossing piece 31 to which welding piece 33 is linked is laminated in a state in which crossing piece 31 to which welding piece 33 is linked is close to the surface of battery holder 2, so that emissions are less likely to flow into a narrow gap between battery holder 2 and crossing piece 31, and the emission preferentially flows into the wide open space 30. Therefore, emissions such as gas exhausted from the safety valve of first electrode 11A are guided to open space 30 formed around first electrode 11A as shown by arrows a, b, and d, and released to the outside. In addition, lead plate 3 includes crossing piece 31 connected to one of the adjacent first electrodes 11A and open space 30 formed around the other first electrode 11A between adjacent first electrodes 11A on first line L1. Therefore, even if a part of emissions moves in the direction of crossing piece 31 as shown by an arrow c, emissions passing through the gap between crossing piece 31 and battery holder 2 are exhausted to the outside from open space 30 formed between first electrode 11A of adjacent secondary battery cell 1 and crossing piece 31, and the adverse effect on first electrode 11A of the adjacent secondary battery cells 1 can be minimized. The above lead plate 3 includes open space 30 formed around first electrode 11A and open space 30 formed on the extension line of crossing piece 31 connected to first electrode 11A to dispose open spaces 30 in all directions around first electrode 11A as a center, so that emissions exhausted from the safety valve of first electrode 11A can be reliably exhausted to the outside. Furthermore, in first output lead plate 3Aa shown in FIG. 8, even if emission moving in the direction shown by an arrow d in the drawing enters between connection part 32 and the surface of battery holder 2, this emission passes through opening part 35 that opens along first side 2a of box-shaped battery holder 2 and promptly are exhausted to the outside.

Furthermore, lead plate 3, in second output lead plate 3Ab and intermediate lead plate 3B, welding piece 33 connected to second electrode 11B is provided to plate-shaped laminated part 38 connecting second electrode 11B of adjacent secondary battery cells 1. These welding pieces 33 are linked to plate-like laminated part 38 via fusible parts 41 extending in an elongated shape, and fuse fusible parts 41 in a state in which an overcurrent flows, thus reliably isolating secondary battery cell 1 from lead plate 3. This welding piece 33 also extends from plate-like laminated part 38 with a step difference, so that even if there is a height difference between the surface of battery holder 2 and the surface of second electrode 11B, welding piece 33 is brought into surface contact with the surface of second electrode 11B, thus enhancing the reliability in welding. Furthermore, each welding piece 33 is provided with slit 33a similar to that described above.

Further, lead plate 3 is provided with connecting terminal part 39, which protrudes upward, to be connected to circuit board 4. Connection terminal part 39 drawn from output lead plate 3A is connected to circuit board 4 and supplies the output of battery block 1Y to circuit board 4. Connecting terminal part 39 drawn from intermediate lead plate 3B is connected to circuit board 4, and supplies the intermediate voltage of battery block 1Y to circuit board 4.

Lead plate 3 described above can be placed in a predetermined position on battery holder 2 in a fitting structure. In battery holder 2 shown in Figs 8 and 9, a plurality of positioning protruded parts 27 protruding from the surfaces are integrally molded on first surface 2A and third surface 2C. Lead plate 3 is provided with a plurality of positioning holes 37 into which positioning protruded parts 27 are inserted. Lead plate 3 is placed in a predetermined position on battery holder 2 with positioning hole 37 guided to positioning protruded part 27, and welding piece 33 is welded to end surface electrode 11 of secondary battery cell 1 and fixed in the predetermined position.

### (Circuit board 4)

On circuit board 4, electronic circuits such as a voltage detection circuit for detecting the total potential of battery block 1Y to which secondary battery cells 1 are connected in series or in parallel or an intermediate potential, a control circuit for controlling charging and discharging, and a protection circuit are mounted. Circuit board 4 is formed in a rectangular shape and is placed in storage region 25 provided on the top of battery holder 2.

### (Insulating plate 5)

Insulating plate 5 is laminated on the surface of lead plate 3 fixed to battery holder 2 to cover and insulate lead plate 3. Insulating plate 5, which is made of resin or paper, is inexpensive, and easy to handle and has excellent heat resistance and flame retardancy against the heat of emissions such as gas exhausted from secondary battery cell 1, is preferably used. As such an insulating plate, for example, aramid paper (Nomex [registered trademark] manufactured by DuPont) or the like can be used. Insulating plate 5 shown in FIG. 4 includes first insulating plate 5A disposed to first surface 2A of battery holder 2 that is box-shaped in outer shape and covering output lead plate 3A, second insulating plate 5B disposed on third surface 2C of battery holder 2 to cover intermediate lead plate 3B, and third insulating plate 5C disposed on second surface 2B of battery holder 2 and covers folded piece 34 and connecting terminal part 39 of first output lead plate 3Aa, and fourth insulating plate 5D disposed on fourth surface 2D of battery holder 2 to cover connecting terminal part 39 of second output lead plate 3Ab.

Third insulating plate 5C includes folded piece 51 on one side of main body part covering folded piece 34 and connecting terminal part 39 of first output lead plate 3Aa disposed on second surface 2B of battery holder 2, and this folded piece 51 is disposed on the surface of connection part 32 of first output lead plate 3Aa disposed on first surface 2A of battery holder 2. Fourth insulating plate 5D includes folded piece 51 on one side of main body part covering connecting terminal part 39 of second output lead plate 3Ab disposed on fourth surface 2D of battery holder 2, and this folded piece 51 is disposed on the surface of plate-like laminated part 38 of second output lead plate 3Ab disposed on first surface 2A of battery holder 2. First insulating plate 5A includes a main body part covering the entire part of first surface 2A of battery holder 2 on which third insulating plate 5C and fourth insulating plate 5D are disposed and folded piece 51 linked to both sides of the main body part, and, as shown in FIG. 3, these folded pieces 51 are laminated and disposed on the surface of second insulating plate 5B disposed on second surface 2B of battery holder 2 and fourth insulating plate 5D disposed on fourth surface 2D. Second insulating plate 5B includes a main body part covering an entire part of third surface 2C of battery holder 2, and folded piece 51 linked to the both sides of the main body part, and these folded pieces 51 are disposed on the surfaces of second surface 2B and fourth surface 2D of battery holder 2.

First insulating plate 5A and second insulating plate 5B are provided with a plurality of exhaust holes 53 at positions facing open space 30 provided in lead plate 3, and emissions exhausted from safety valve of first electrode 11A are allowed to pass from open space 30 through exhaust hole 53 of insulating plate 5 and to be exhausted to the outside promptly. First insulating plate 5A and second insulating plate 5B shown in FIG. 4 are provided with two left and right rows of exhaust holes 53 in regions facing four open spaces 30 formed in first output lead plate 3Aa and intermediate lead plate 3B, that is, in four places in the vertical direction. Each exhaust hole 53 is opened as a slit hole having a total length approximately equal to the vertical width W of open space 30 so that emissions exhausted in open space 30 can be allowed to promptly pass through and be exhausted to the outside. In first insulating plate 5A and second insulating plate 5B, exhaust holes 53 are located in four stages vertically and two rows horizontally on both sides of first electrodes 11A arranged vertically, and connect the centers of first electrodes 11A in a slit shape parallel to the first line L1 linking the centers of first electrode 11A. In this way, by providing a plurality of exhaust holes 53 at positions facing open spaces 30 provided in lead plate 3, as shown by the arrow in FIG. 10, emissions such as gas exhausted from the safety valve of first electrode 11A can be promptly guided from open space 30 to exhaust hole 53 and exhausted to the outside. However, the shape, number, and arrangement of exhaust holes 53 provided in insulating plate 5 are not limited to the above examples, and may be changed in various ways so that the emissions flowing into open space 30 can be promptly exhausted to the outside. Note here that each exhaust hole 53 is opened in the shape of a slit so as not to impair the insulation function of first insulating plate 5A and second insulating plate 5B.

In addition, third insulating plate 5C and first insulating plate 5A that cover first output lead plate 3Aa have opening part 52 at the boundary between the main body part and folded piece 51, and a position facing opening part 35 provided in the first output lead plate 3Aa. Thus, an emission exhausted from the safety valve of first electrode 11A and passing through opening part 35 of first output lead plate 3Aa is allowed to pass through the opening 52 of insulating plate 5 and promptly exhausted to the outside.

### (Outer covering sheet 7)

Battery assembly 10 in which insulating plate 5 is disposed on the surface of lead plate 3 and the surface of circuit board 4 is covered with insulating member 6 is covered with outer covering sheet 7 as shown in FIG. 1. Outer covering sheet 7, as shown in FIG. 3, serves as a heat-shrinkable bag or tube and covers battery assembly 10 in a state in which battery assembly 10 is housed inside and heat-shrunk. For such an outer covering sheet 7, resin such as PET, which is preferably excellent in insulation and stability, can be used. In particular, a shrink tube made of PET resin is preferable as a heat-shrinkable tube because it is inexpensive.

### (Leader wire 18, connector 19)

In addition, in battery pack 100 shown in Figs 1 to 7, a plurality of leader wires 18 is connected to circuit board 4 and drawn out from battery assembly 10. Leader wire 18 includes positive and negative power lines and signal lines, and is directly connected to a connector of a device in which battery pack 100 is set. The plurality of leader wires 18 has one end connected to circuit board 4 and the other end connected to connector 19.

Battery pack 100 described above is built in the main body of an electrical device such as a speaker and is used as a power source. Battery pack 100 supplies electric power to the main body device via leader wire 18 drawn out to the outside, or receives power from the main body device to charge the built-in secondary battery cell 1. Leader wire 18 drawn out from battery pack 100 is connected to the connection connector at the main body side via output connector 19 connected to the tip end to supply electric power.

### INDUSTRIAL APPLICABILITY

A battery pack according to the present invention can be suitably used as a power source of electrical devices such as wireless speakers, electrically-driven cleaners, and electrically-driven tools. Furthermore, the battery pack can also be suitably used for applications such as power supply devices for moving objects such as assisted bicycles and electric carts.

### REFERENCE MARKS IN THE DRAWINGS

100 battery pack
1 secondary battery cell
1X parallel unit
1Y battery block
2 battery holder
2X first holder
2Y second holder
2A first surface
2B second surface
2C third surface
2D fourth surface
2a first side
3 lead plate
3A output lead plate
3Aa first output lead plate
3Ab second output lead plate
3B intermediate lead plate
4 circuit board
5 insulating plate
5A first insulating plate
5B second insulating plate
5C third insulating plate
5D fourth insulating plate
6 insulating member
7 outer covering sheet
10 battery assembly
11 end surface electrode
11A first electrode
11B second electrode
13 non-melting plate
18 leader wire
19 connector
21 storage space
22 holding cylinder
23 partition wall
24 connecting window
25 storage region
27 positioning protruded part
30 open space
31 crossing piece
32 connection part
33 welding piece
33a slit
34 folded piece
35 opening part
36 linking part
37 positioning hole
38 plate-like laminated part
39 connecting terminal part
41 fusible part
51 folded piece
52 opening part
53 exhaust hole
90 battery pack
91 secondary battery cell
91A first electrode
92 battery holder
93 lead plate
L1 first line

## Claims

1. A battery pack comprising:
a plurality of secondary battery cells arranged in parallel to each other in a longitudinal direction, each of the plurality of secondary battery cells including end surface electrodes each on both ends of the secondary battery, at least one of the end surface electrodes being a first electrode including a safety valve;
a battery holder for holding the plurality of secondary battery cells; and
a lead plate with conductivity for connecting the end surface electrodes of secondary battery cells adjacent to each other among the plurality of secondary battery cells,
wherein the lead plate includes an open space between first electrodes in the secondary battery cells adjacent to each other, the first electrode being one of the first electrodes.

2. The battery pack according to claim 1, wherein
the lead plate includes:
a plurality of crossing pieces each connected to the first electrode of a corresponding one of the secondary battery cells adjacent to each other, and extending in a second direction intersecting a first line linking centers of the first electrodes of the secondary battery cells adjacent to each other at a shortest distance, and
a connection part extending from an edge of each of the crossing pieces connected to the secondary battery cells adjacent to each other in parallel to the first line, and connecting the crossing pieces to each other,
wherein the crossing pieces and the connection part define the open space.

3. The battery pack according to claim 2, wherein the open space is defined of the crossing pieces adjacent to each other and the connection part of the lead plate in a U-shape in plan view.

4. The battery pack according to claim 2, wherein
the crossing pieces are disposed between the first electrodes of the secondary battery cells adjacent to each other,
the lead plate further includes:
a welding piece extending from each of crossing pieces to the first electrode of a corresponding secondary battery cell along the first line.

5. The battery pack according to claim 2, wherein
the open space is defined around the first electrode of each of the secondary battery cells, and
the crossing pieces connected to one of the first electrodes and the open space defined around another of the first electrodes are disposed on the first line in the first electrodes adjacent to each other.

6. The battery pack according to any one of claim 2 to claim 5, wherein
an outer shape of the battery holder is a box shape, and
the battery holder includes a plurality of secondary battery cells with the first electrodes disposed along a first side of a first surface defining the box shape, and
the lead plate further includes
a folded piece folded on a second surface intersecting the first side of the first surface from the connection part positioned on the first surface.

7. The battery pack according to claim 6, wherein
in a connection site at which the connection part and the folded piece are connected to each other on the first side, in a region in which the first electrodes of the plurality of secondary battery cells are positioned on the first surface, the connection site is provided with an opening part.

8. The battery pack according to claim 7,
the lead plate further includes,
a linking part for connecting the connection part and the folded piece to each other, wherein
the linking part is provided to face a region between the first electrodes of the secondary battery cells adjacent to each other in the first surface.

9. The battery pack according to any one of claim 1 to claim 5, comprising
a plurality of parallel units connected in parallel, each of the plurality of parallel units including the secondary battery cells arranged in parallel, wherein the plurality of parallel units is connected in series to constitute a battery block including the plurality of secondary battery cells connected in series and parallel, and
the lead plate is an output lead plate connected at an output of the battery block.

10. The battery pack according to any one of claim 2 to claim 5, comprising
a plurality of parallel units connected in parallel, each of the plurality of parallel units including the secondary battery cells arranged in parallel, wherein the plurality of parallel units is connected in series to each other to constitute a battery block including the plurality of secondary battery cells connected in series and parallel,
the lead plate is an intermediate lead plate connecting the parallel units in series,
the intermediate lead plate includes a plate-like laminated part connecting the first electrodes of the secondary battery cells adjacent to each other and second electrodes as the end surface electrodes opposite end, in a direction parallel to the first line, and
the plate-like laminated part is used also as the connection part, and includes the plurality of crossing pieces extending from the plate-like laminated part in a second direction, and connecting each of the crossing pieces to the first electrode of corresponding one of the secondary battery cells.

11. The battery pack according to any one of claim 1 to claim 5, comprisingan insulating plate covering a surface of the lead plate and insulating the lead plate, wherein
the insulating plate includes an exhaust hole in a position facing the open space, for allowing an emission exhausted from the secondary battery cell to pass.

12. The battery pack according to claim 11, wherein
the exhaust hole is slit-shaped.
